# EUROPÄISCHE PATENTSCHRIFT

(11) **EP 3 494 808 B1**
(45) Veröffentlichungstag und Bekanntmachung des Hinweises auf die Patenterteilung: **23.09.2020**
(21) Anmeldenummer: 18207719.8
(22) Anmeldetag: 22.11.2018
(51) Int. Cl.: A24C 5/14, F16P 1/02, A24C 5/00

(54) **RAUCHARTIKELHERSTELLEINRICHTUNG**
SMOKING ITEM PRODUCTION DEVICE
DISPOSITIF DE FABRICATION D'ARTICLES À FUMER

(30) Priorität: 06.12.2017 DE 102017129016
(43) Veröffentlichungstag der Anmeldung: 12.06.2019
(73) Patentinhaber: Hauni Maschinenbau GmbH, 21033 Hamburg (DE)
(72) Erfinder: LANGE, Daniel, 21029 Hamburg (DE); TRITZ, Carsten, 21029 Hamburg (DE); MEINKE, Karsten, 23879 Mölln (DE); FOLGER, Manfred, 21035 Hamburg (DE); HOFMANN, Nils, 21029 Hamburg (DE); GLOSSE, Benjamin, 37327 Wingerode (DE); MITOV, Georg, 22397 Hamburg (DE)
(74) Vertreter: Müller Verweyen

(56) Entgegenhaltungen:
- DE-A1-102008 039 432
- DE-B3-102005 007 691
- US-A- 4 700 517
- US-A1- 2014 371 044

## Beschreibung

Die vorliegende Erfindung betrifft eine Rauchartikelherstelleinrichtung mit den Merkmalen des Oberbegriffs von Anspruch 1.

Unter dem Begriff Rauchartikelherstelleinrichtungen werden sowohl Einrichtungen zur Herstellung von konventionellen Produkten der Tabak verarbeitenden Industrie wie z.B. Zigaretten, Zigarillos, Zwischenprodukten wie Filter oder Tabakstöcke als auch Einrichtungen verstanden, in denen neuartige Produkte zum Rauchen oder Inhalieren von alternativen Stoffen z.B. von ätherischen Substanzen aus Flüssigkeiten oder vergastem Tabak hergestellt werden. Sowohl die konventionellen Produkte als auch die neuartigen Produkte werden aus einzelnen unterschiedlichen Segmenten hergestellt, welche jeweils in einem vorgelagerten Schritt der Herstellung in einer Strangherstellmaschine in einem endlosen Strang hergestellt werden und dann mittels einer Schneideinrichtung in einzelne Segmente vorbestimmter Länge geschnitten werden. Die verschiedenen Segmente werden dann in der Rauchartikelherstelleinrichtung zu stabförmigen Produkten zusammengefügt und miteinander verbunden. Solche neuartigen Produkte werden z.B. als Heat Not Burn-Produkte (HNB Produkte) oder auch E-Zigaretten bezeichnet.

Je nach Art der Anlage kann die Strangherstellmaschine zur Herstellung des endlosen Stranges einschließlich der zugehörigen Schneideinrichtung und der Transporteinrichtung zum Weitertransport der Segmente eine Baugruppe bzw. ein Modul der Rauchartikelherstelleinrichtung oder auch eine vorgelagerte eigenständige Herstelleinrichtung sein. Ein weiteres Modul kann eine sich anschließende Verpackungseinrichtung sein, in der die fertigen Produkte portioniert in Verpackungen abgepackt werden.

Allgemein kann die Rauchartikelherstelleinrichtung ferner ein Zuführmodul, ein oder mehrere Rollmodule und ein Prüf- und Abgabemodul aufweisen, wobei die Anzahl der Rollmodule, die Art des Zuführmoduls und die Art des Prüf-und Abgabemoduls individuell von der Art der herzustellenden Produkte oder individuell auf die Herstellervorgaben abgestimmt sind. Zur Verringerung der Herstellkosten werden dabei soweit wie möglich identische Baugruppen bzw. Module verwendet, welche zu der Rauchartikelherstelleinrichtung zusammengesetzt werden. Aufgrund des modulartigen Aufbaus weist die Rauchartikelherstelleinrichtung in Abhängigkeit von der Anzahl und der Art der Module unterschiedliche Längen bzw. allgemein unterschiedliche Abmaße auf.

Die Rauchartikelherstelleinrichtung ist zur Umgebung hin durch ein Gehäuse gekapselt, so dass die Bedienpersonen und die sich allgemein in der Umgebung aufhaltenden Personen vor Verletzungen durch einen unbeabsichtigten Eingriff in die Herstelleinrichtung geschützt sind. Ferner dient das Gehäuse dem Schallschutz zur Reduzierung der Lärmbelastung der sich in der Umgebung aufhaltenden Personen. Ferner muss die Rauchartikelherstelleinrichtung zu Zwecken der Wartung, des Umbaus oder auch zur Beseitigung von Störungen zugänglich sein. Damit muss das Gehäuse eine Zugangsöffnung aufweisen, welche einen Zugang der Bedienpersonen zu der Rauchartikelherstelleinrichtung ermöglicht. Andererseits müssen die Bedienpersonen und die sich in der Nähe allgemein aufhaltenden Personen vor Verletzungen durch die Rauchartikelherstellmaschine bzw. vor einem unbeabsichtigten Eingriff und der damit verbundenen Gefährdung geschützt werden. Um beiden Anforderungen zu genügen, muss die Zugangsöffnung mittels einer Verschutzung wieder verschließbar sein, welche dann zur Freigabe der Zugangsöffnung geöffnet oder gelöst werden kann. Unter dem Begriff der "Verschutzung" werden Klappen, Türen oder auch einfache Wandteile verstanden, durch welche die Zugangsöffnung geschlossen und ein Eingriff verhindert werden kann.

Eine solche Rauchartikelherstelleinrichtung, welche als Maschine der Tabak verarbeitenden Industrie bezeichnet ist, mit einem Gehäuse mit einer Zugangsöffnung und einer Verschutzung zum Verschließen der Zugangsöffnung ist z.B. aus der DE 10 2008 039 432 A1 bekannt.

Die Verschutzung der Zugangsöffnung des Gehäuses der Rauchartikelherstelleinrichtung ist durch ein Verschutzungswandteil gebildet, welches speziell entsprechend den Abmaßen und der Form der Zugangsöffnung bemessen und ausgelegt ist. Sofern die Rauchartikelherstelleinrichtung durch Hinzufügung weiterer Module erweitert werden würde, würde die Rauchartikelherstelleinrichtung und die daran vorzusehende Zugangsöffnung eine erheblich größere Länge und Abmaße im Allgemeinen aufweisen, so dass ein entsprechend großes neu ausgelegtes Verschutzungswandteil vorgesehen werden müsste, welches zur Freigabe der Zugangsöffnung mit entsprechend großen Betätigungskräften bewegt werden müsste. Sofern mehrere einzelne Zugangsöffnungen vorgesehen sind, können diese jeweils durch einzelne Verschutzungswandteile verschließbar sein, welche wiederum individuell an die Form und die Abmaße der zu verschließenden Zugangsöffnung angepasst sein müssen. Damit ist die Verschutzung aufwendig in der Auslegung, und das Verschutzungswandteil muss im Schadensfall durch ein identisches Verschutzungswandteil ausgetauscht werden, welches speziell für die Rauchartikelherstelleinrichtung vorgehalten oder speziell angefertigt werden muss.

Vor diesem Hintergrund liegt der Erfindung die Aufgabe zugrunde, eine Rauchartikelherstelleinrichtung mit verschiedenen Modulen und einer Zugangsöffnung mit einer Verschutzung bereitzustellen, bei der die oben beschriebenen Nachteile vermieden sind.

Zur Lösung der Aufgabe wird eine Rauchartikelherstellmaschine mit den Merkmalen von Anspruch 1 vorgeschlagen. Weitere bevorzugte Weiterentwicklungen sind den Unteransprüchen, den Figuren und der zugehörigen Beschreibung zu entnehmen.

Gemäß dem Grundgedanken der Erfindung wird vorgeschlagen, dass die Verschutzung durch eine Kombination aus wenigstens zwei identischen, unabhängig voneinander zu öffnenden ersten Verschutzungswandteilen und wenigstens einem zweiten individuell bemessenen Verschutzungswandteil gebildet ist.

Durch die erfindungsgemäße Lösung kann die Verschutzung besonders einfach an Zugangsöffnungen mit anderen Abmessungen angepasst werden, indem zunächst eine entsprechende maximale Anzahl erster identischer Verschutzungswandteile vorgesehen wird, so dass die Zugangsöffnung durch diese mit einer maximalen Fläche verschlossen wird. Die Restfläche, welche durch die ersten Verschutzungswandteile nicht abgedeckt werden kann, wird dann durch das zweite oder die zweiten Verschutzungswandteile abgedeckt, welche in der Form an die Restfläche angepasst sind. Die Verschutzung kann dadurch für den Fall, dass die Rauchartikelherstellherstellmaschine durch Ergänzung eines weiteren Moduls vergrößert wird, und die Zugangsöffnung dadurch ebenfalls vergrößert wird, durch eine Ergänzung eines oder mehrerer weiterer erster Verschutzungswandteile sehr einfach an die größere Zugangsöffnung angepasst werden, wobei ein neues individuell an die verbleibende Restfläche angepasstes zweites Verschutzungswandteil vorgesehen werden kann. Die Verschutzung kann dabei in dem ursprünglichen Umfang unverändert bleiben und wird praktisch nur individuell entsprechend des ergänzten Moduls durch Hinzunahme eines oder mehrerer weiterer ersten oder zweiter Verschutzungswandteile erweitert. Da die ersten Verschutzungswandteile jeweils identisch sind, können die Herstellkosten der Verschutzung aufgrund der durch den Mengeneffekt reduzierten Herstellkosten der ersten Verschutzungswandteile gesenkt werden. Daneben können der Reparaturaufwand und die Reparaturkosten reduziert werden, indem von den ersten Verschutzungswandteilen ein oder mehrere Ersatzteile vorgehalten werden, welche bei einer Beschädigung oder Funktionsunfähigkeit eines ersten Verschutzungswandteiles gegen dieses einfach ausgetauscht werden kann. Sofern mehrere Rauchartikelherstelleinrichtungen gleicher oder unterschiedlicher Größe und Art bei einem Hersteller in Betrieb sind, können die identischen ersten Verschutzungswandteile auch für die verschiedenen Rauchartikelherstelleinrichtungen verwendet werden. Ferner kann die Bedienung der Verschutzung vereinfacht werden, indem für die vorzunehmende Handlung an der Rauchartikelherstelleinrichtung nur eines der ersten Verschutzungswandteile geöffnet werden muss, welches aufgrund seiner Anordnung den für die Handlung erforderlichen Bereich der Zugangsöffnung freigibt. Da das zu öffnende Verschutzungswandteil aufgrund der erfindungsgemäßen Lösung im Vergleich zu dem bisher verwendeten, die Zugangsöffnung insgesamt verschließenden Verschutzungswandteil erheblich kleiner ausgeführt werden kann, muss der Bediener zur Schaffung der Zugänglichkeit mit dem sehr viel kleineren ersten Verschutzungswandteil eine sehr viel kleinere Masse bewegen, wodurch die Handhabbarkeit wesentlich verbessert wird. Ferner wird nur der zur Vornahme der Handlung erforderliche Bereich der Zugangsöffnung und der Rauchartikelherstelleinrichtung freigegeben, während der verbleibende Bereich der Rauchartikelherstelleinrichtung weiter verschlossen ist und der Bediener dadurch weiterhin geschützt ist. Ferner kann die Zugänglichkeit der Rauchartikelherstelleinrichtung durch die weiterentwickelte Verschutzung verbessert werden, indem bei einem Schaden des Öffnungsmechanismus eines Verschutzungswandteiles der Bediener immer noch durch die Öffnung eines benachbarten Verschutzungswandteiles einen Zugang zu der Rauchartikelherstelleinrichtung hat. Ferner kann die Zugangsöffnung selbst sehr viel größer und unabhängig von der Größe der zu bewegenden Verschutzungswandteile ausgelegt werden, da die Zugangsöffnung modulartig durch eine Mehrzahl von Verschutzungswandteilen verschließbar ist. Damit kann die Zugangsöffnung z.B. auch die Höhe einer Person aufweisen, wobei die Verschutzungswandteile dann jeweils Streifen der Zugangsöffnung abdecken und beim Öffnen die Zugangsöffnung sektionsweise freigeben.

Weiter wird vorgeschlagen, dass die Zugangsöffnung an wenigstens zwei gegenüberliegenden Randseiten jeweils eine Profilschiene aufweist, an denen die Verschutzungswandteile in einer Schließstellung zur Anlage gelangen. Durch die Profilschienen werden geradlinige Anlageflächen für die Verschutzungswandteile geschaffen, welche ein schalldichtes Verschließen der Zugangsöffnung ermöglichen. Ferner können die Verschutzungswandteile dadurch in der Geschlossenstellung mechanisch gut unterstützt und fixiert werden. Die Profilschienen können kostengünstig als Halbzeug in großen Mengen gekauft und individuell auf die Längen der Randseiten der Zugangsöffnung zurechtgeschnitten werden. Dabei können die Profilschienen bevorzugt durch geradlinige, in der Befestigungsstellung parallel zueinander ausgerichtete Schienen gebildet sein.

Weiter wird vorgeschlagen, dass die ersten Verschutzungswandteile durch wenigstens zwei Teilwandteile gebildet sind, welche jeweils mittels eines Führungsteils gegenüber den Profilschienen schwenkbar und verschieblich geführt sind, wobei die jeweils aneinander angrenzenden Teilwandteile an den senkrecht zu den Profilschienen ausgerichteten ersten Randseiten schwenkbar miteinander verbunden sind. Die beiden Teilwände des Verschutzungswandteiles können durch die vorgeschlagene Lösung in einem Dreieck aufeinander gefaltet werden, wobei sie an den ersten Randseiten schwenkbar miteinander verbunden sind, und um die durch die Führungsteile gebildeten Schwenkachsen gegenüber den Profilschienen verschwenken und mit den Führungsteilen gegenüber den Profilschienen eine Verschiebebewegung ausführen. Die Verschutzungswandteile können dadurch aus einer flächigen Ausrichtung in einer die Zugangsöffnung verschließenden Geschlossenstellung in eine gefaltete, die Zugangsöffnung zumindest teilweise freigebende Offenstellung verschwenkt werden. Dazu übte der Bediener entweder eine Druck- oder eine Zugkraft auf die Teilwände in Bereich der schwenkbar miteinander verbundenen Randseiten aus, wodurch der Faltvorgang des Verschutzungswandteiles durch ein Aufeinanderfalten der Teilwandteile ausgelöst wird. Neben der Schwenkbewegung können die Teilwandteile zusätzlich gegenüber bzw. in den Profilschienen verschoben und damit aufeinander zubewegt und gefaltet werden. Soweit die Teilwandteile durch die Ausübung einer Zugkraft gefaltet werden, kann es sinnvoll sein, einen Handgriff oder einen Knauf an jeweils einem der Teilwände vorzusehen, über welche die Bedienperson eine Zugkraft auf die Teilwandteile ausüben kann. Ferner wird vorgeschlagen, dass die Führungsteile in identischen Abständen zu den ersten Randseiten angeordnet sind. Durch die vorgeschlagene Lösung werden die Teilwände in dem Abschnitt zwischen den Führungsteilen und der ersten Randseite im Querschnitt zu einem gleichschenkligen Dreieck gefaltet, wodurch die Faltbewegung sehr einfach ausgeführt werden kann. Da die ersten Verschutzungswandteile über dies untereinander identisch sind, ergibt sich damit im gefalteten Zustand zweier Verschutzungswandteile ein Paket mit in einer Ebene angeordneten Vorder- und Hinterkanten der Teilwandteile, oder anders ausgedrückt weisen die gefalteten Vorder- und Hinterkanten der Teilwandteile der Verschutzungswandteile einen identischen Abstand zu den Profilschienen auf. Dabei ist der Abstand der Führungsteile senkrecht zu der ersten Randseite das für die Auslegung am einfachsten auszulegende Maß.

Weiter wird vorgeschlagen, dass die Führungsteile an senkrecht zu den ersten Randseiten verlaufenden dritten Randseiten, in einem größtmöglichen Abstand zu den ersten Randseiten angeordnet sind. Durch die vorgeschlagene Lösung werden die Verschutzungswandteile beim Öffnen maximal aus der Ebene der Zugangsöffnung zu einer Seite z.B. zu der Außenseite der Rauchartikelherstelleinrichtung heraus gefaltet. Sofern die Führungsteile unmittelbar an dem Rand der Teilwandteile angeordnet sind, kann die Faltung des Verschutzungswandteiles so ausgelegt werden, dass die Teilwandteile beim Falten ausschließlich zu einer Seite z.B. zu der Außenseite bewegt werden. Damit kann das Gehäuse so ausgelegt werden, dass es sehr dicht zu den Modulen der Rauchartikelherstelleinrichtung angeordnet ist.

Weiter wird vorgeschlagen, dass zwischen den Profilschienen und den Verschutzungswandteilen eine erste Dichtung vorgesehen ist, welche querschnittsveränderbar ist. Durch die Querschnittsveränderbarkeit der ersten Dichtung kann diese so ausgebildet sein, dass der Querschnitt der Dichtung in der Geschlossenstellung größer ist, so dass die Dichtung mit einer erhöhten Dichtkraft zwischen dem Verschutzungswandteil und den Profilschienen anliegt. Ferner kann der Querschnitt zum Öffnen des Verschutzungswandteiles verkleinert werden, so dass die Druckkraft bewusst verringert wird oder der Kontakt sogar aufgehoben wird. Dadurch kann einerseits die Öffnungsbewegung vereinfacht werden und andererseits kann der Schallschutz in der Geschlossenstellung aufgrund der verbesserten Dichtigkeit verbessert werden. Dabei soll der Begriff querschnittsveränderbar im Sinne der Erfindung so verstanden werden, dass die Querschnittsfläche der Dichtung verändert und insbesondere vergrößert oder verkleinert werden kann, so dass sie in der Lage ist, den Zwischenraum zwischen dem Verschutzungswandteil und dem Rand der Zugangsöffnung mehr oder weniger auszufüllen bzw. eine größere, kleinere oder auch gar keine Druckkraft zwischen beiden Teilen auszuüben. Alternativ wäre es auch denkbar, die Querschnittsveränderbarkeit durch eine Veränderung der Verformbarkeit der Dichtung zu realisieren, so dass sie sich in der Geschlossenstellung der Verschutzungswandteile weniger verformt und mit einer erhöhten Anpresskraft dichtend an den Teilen anliegt, während sie zur Bewegung der Verschutzungswandteile in die Offenstellung bewusst so verändert werden kann, dass sie eine höhere Verformbarkeit aufweist und damit nachgeben kann.

Dabei kann bevorzugt eine Einrichtung vorgesehen sein, mittels derer der Querschnitt der ersten Dichtung aktiv veränderbar ist, wobei die Einrichtung bevorzugt derart ansteuerbar ist, dass der Querschnitt der Dichtung in einer Schließstellung des Verschutzungswandteiles vergrößerbar und/oder zum Bewegen des Verschutzungswandteiles in eine Offenstellung verkleinerbar ist. Die Querschnittsveränderung kann z.B. dadurch bewirkt werden, indem die Dichtung pneumatisch ausgebildet ist und mit Druckluft beaufschlagt werden kann. Sofern die aktive oder dynamische erste Dichtung mit dem veränderbaren Querschnitt einen Anschluss an eine externe Einrichtung wie z.B. eine Drucklufteinrichtung oder eine Steuereinrichtung aufweist, ist die erste Dichtung bevorzugt an dem Rand der Zugangsöffnung also an der Profilschiene oder angrenzend zu der Profilschiene feststehend an dem Gehäuse der Rauchartikelherstelleinrichtung angeordnet, so dass ein einfacher zu realisierender feststehender Anschluss an die externe Einrichtung verwendet werden kann.

Weiter wird vorgeschlagen, dass die Verschutzungswandteile an wenigstens einer einem benachbarten Verschutzungswandteil zugewandten Randseite eine statische zweite Dichtung aufweisen. Durch die statische Dichtung kann der nicht zu vermeidende Spalt zwischen den Verschutzungswandteilen in der Geschlossenstellung abgedichtet werden und dadurch der Schallschutz weiter verbessert werden. Da die einander zugewandten Randseiten der verschiedenen Verschutzungswandteile bei der Bewegung aus der Geschlossenstellung in die Offenstellung und umgekehrt eine Relativbewegung zueinander ausführen, gelangen sie beim Schließen selbsttätig über die statische Dichtung dichtend zur Anlage aneinander, so dass die Verwendung einer statischen Dichtung hier die sinnvollste und einfachste Lösung zur Verbesserung des Schallschutzes ist. Dies ist insbesondere deshalb der Fall da die statische Dichtung keinen Kontakt oder Anschluss zu einer externen Einrichtung aufweist, der aufgrund der Bewegung der Verschutzungswandteile schwierig zu realisieren wäre.

Weiter kann zwischen den ersten und/oder den zweiten Verschutzungswandteilen wenigstens ein Zwischenstück vorgesehen sein. Durch das verschiebbare Zwischenstück kann die Verschutzung mit einem nicht zu öffnenden Zwischenstück versehen werden, sofern dieser Abschnitt der Zugangsöffnung für die Wartung nicht geöffnet zu werden braucht oder durch einen anderen Abschnitt der Zugangsöffnung zugänglich ist. Das Zwischenstück kann feststehend sein und so einen festen Abschnitt der Zugangsöffnung abdecken. Ferner kann das Zwischenstück auch der Versteifung der Zugangsöffnung oder als feste Anlagefläche für ein angrenzendes Verschutzungswandteil dienen. Alternativ kann das Zwischenstück auch verschiebbar ausgebildet sein, so dass es für den Zugang zu der Rauchartikelherstelleinrichtung individuell verschoben und positioniert werden kann.

Die Erfindung wird im Folgenden anhand bevorzugter Ausführungsformen unter Bezugnahme auf die beigefügten Figuren erläutert.
Dabei zeigt
- Fig. 1: eine erfindungsgemäße Rauchartikelherstelleinrichtung mit einer geschlossenen Verschutzung, und

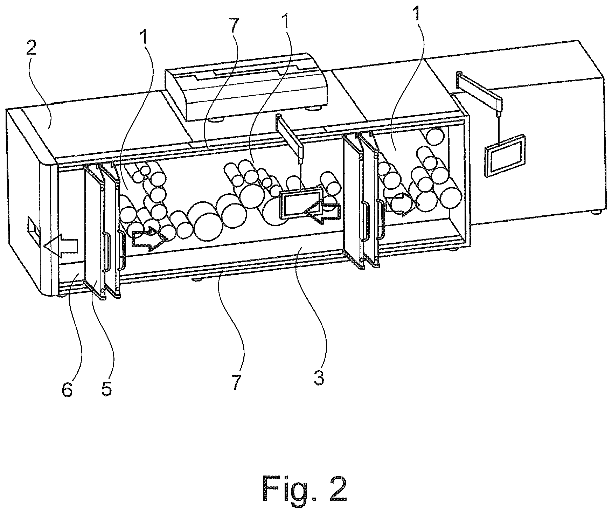

- Fig. 2: eine erfindungsgemäße Rauchartikelherstelleinrichtung mit einer offenen Verschutzung, und
- Fig. 3: die Verschutzung in einer vergrößerten Darstellung mit mehreren ersten Verschutzungswandteilen.

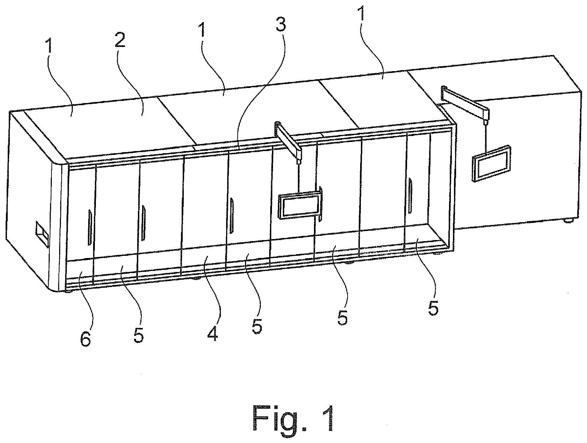

In der Figur 1 ist eine erfindungsgemäße Rauchartikelherstelleinrichtung zu erkennen, welche mehrere Module 1 aufweist. Ferner weist die Rauchartikelherstelleinrichtung ein Gehäuse 2 mit einer Zugangsöffnung 3 auf, welche durch eine Verschutzung 4 verschlossen ist. Die Zugangsöffnung 3 erstreckt sich über nahezu die gesamte Frontseite und insbesondere über die gesamte Höhe und nahezu über die gesamte Breite des Gehäuses 2, so dass die die Zugangsöffnung 3 verschließende Verschutzung 4 entsprechend groß bemessen ist.

Das Gehäuse 2 und die Zugangsöffnung 3 mit der Verschutzung 4 sind an die Abmessungen der aus den Modulen 1 zusammengesetzten Baugruppe der Rauchartikelherstelleinrichtung angepasst. Sofern z.B. ein anderes Produkt hergestellt werden soll, kann die Rauchartikelherstelleinrichtung durch eine Hinzufügung weiterer Module 1 oder durch den Austausch von Modulen 1 sehr einfach modifiziert werden. Das Gehäuse 2 und die Zugangsöffnung 3 werden dann an die Baugruppe der neuen Module 1 angepasst. Dabei weisen die Module 1 bevorzugt eine identische Höhe auf, so dass das Gehäuse 2 und die Zugangsöffnung 3 nur in der Länge angepasst werden müssen. Die Zugangsöffnung 3 ist rechteckförmig ausgebildet und weist zwei horizontal und parallel zueinander verlaufende Randseiten 7 an der Ober- und Unterseite auf. Die Verschutzung 4 ist transparent und ermöglicht dadurch einen wenigstens nahezu vollständigen Einblick in die Rauchartikelherstelleinrichtung mit den zusammengesetzten Modulen 1.

Die Verschutzung 4 ist erfindungsgemäß modulartig durch mehrere identische erste Verschutzungswandteile 5 und ein zweites Verschutzungswandteil 6 gebildet. Die modulartige Verschutzung 4 wird bei der Auslegung an die Zugangsöffnung 3 angepasst, indem zunächst eine maximale Anzahl von identischen ersten Verschutzungswandteilen 5 vorgesehen wird, und die verbleibende Restfläche dann durch ein individuell entsprechend der Restfläche bemessenes zweites Verschutzungswandteil 6 verschlossen wird. Die ersten Verschutzungswandteile 5 können dabei bewusst derart angeordnet und bemessen sein, dass die Trennstellen zwischen den ersten Verschutzungswandteilen 5 nicht mit den Trennstellen zwischen den Modulen 1 der Rauchartikelherstelleinrichtung übereinstimmen, so dass der modulartige Aufbau der Rauchartikelherstelleinrichtung bewusst verdeckt wird und für den Betrachter nur bei sehr genauer Betrachtung erkennbar ist.

Die ersten Verschutzungswandteile 5 können jeweils einzeln geöffnet werden, indem sie gefaltet und bedarfsweise zur Seite geschoben werden, während das zweite Verschutzungswandteil 6 in Form einer Tür ausgebildet ist und einzeln verschwenkt werden kann. Das zweite Verschutzungswandteil 6 kann dabei bevorzugt an dem links- oder rechtsseitigen Rand in der Zugangsöffnung 3 angeordnet und in einer an dem Rand vorgesehenen Schenkhalterung gehalten sein. Damit kann die Zugangsöffnung 3 sektionsweise freigegeben werden, indem die ersten und/oder das zweite Verschutzungswandteil 5 oder 6 paarweise, gruppenweise oder einzeln geöffnet werden. Die ersten Verschutzungswandteile 5 und das zweite Verschutzungswandteil 6 sind jeweils mit einem Handgriff 15 versehen, den die Bedienperson zum Öffnen des ersten oder zweiten Verschutzungswandteils 5 oder 6 zu sich heranziehen muss. Dabei kann die Bedienperson einen größeren Teil der Zugangsöffnung 3 freigeben, indem sie zwei Verschutzungswandteile 5 oder 6 gleichzeitig mit jeweils einer Hand öffnet.

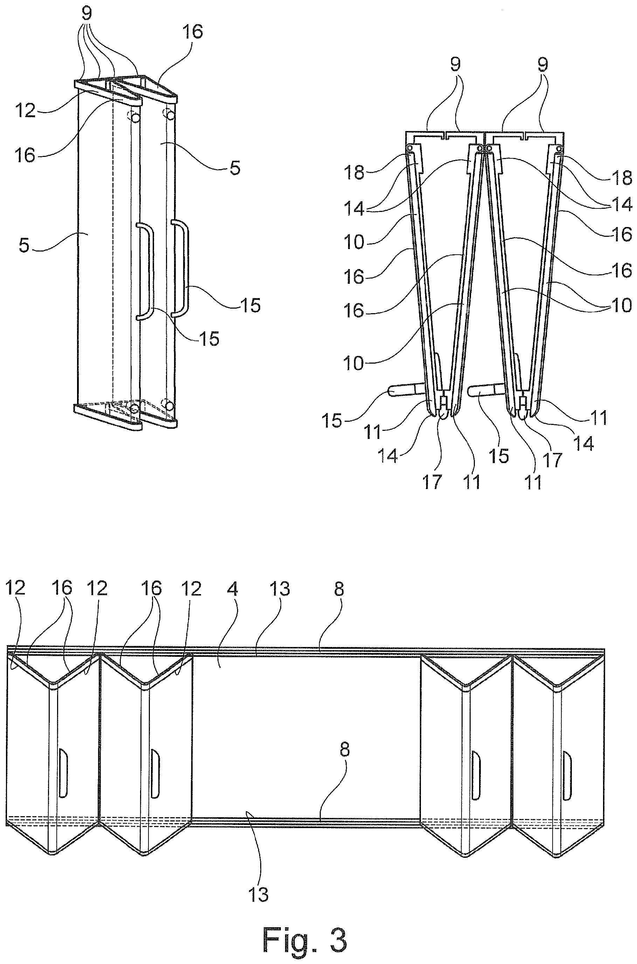

In der Figur 3 sind die ersten Verschutzungswandteile 5 der Verschutzung 4 vergrößert zu erkennen. Die ersten Verschutzungswandteile 5 sind jeweils durch Teilwandteile 10 gebildet, welche an ihren ersten Randseiten 11 schwenkbar miteinander verbunden sind. Die Teilwandteile 10 eines Verschutzungswandteiles 5 sind an den zweiten Randseiten 12, in diesem Fall an der Ober- und Unterseite mit Rahmenteilen 16 versehen, an denen jeweils ein Führungsteil 9 vorgesehen ist. Ferner sind die Rahmenteile 16 an ihren den ersten Randseiten 11 der Teilwandteile 10 zugewandten Enden über ein Schwenklager 17 miteinander verbunden und bilden damit die schwenkbare Verbindung der beiden Teilwandteile 10 an den ersten Randseiten 11. Sowohl an den ersten Randseiten 11 der Teilwandteile 10 als auch an den parallel zu diesen verlaufenden dritten Randseiten 18 sind jeweils statische zweite Dichtungen 14 vorgesehen, welche in der Geschlossenstellung der Verschutzungswandteile 5 die Spalte zu den aneinander angrenzenden Teilwandteilen 10 eines Verschutzungswandteiles 5 als auch zwischen den Verschutzungswandteilen 5 und 6 abdichten. Die Spalte zwischen den Teilwandteilen 10 eines Verschutzungswandteiles 5 sind so breit bemessen, hier mit 25 mm, dass Verletzungen durch eingeklemmte Finger sicher verhindert werden können.

Die ersten Verschutzungswandteile 5 weisen an den äußeren dritten Randseiten 12 der Teilwandteile 10 jeweils ein gelenkig angekoppeltes Führungsteil 9 in Form eines flachen Führungsschuhs auf. Zur Befestigung der Verschutzung 4 weist diese zwei Profilschienen 8 auf, von denen jeweils eine an der oberen und eine an der unteren Randseite 7 der Zugangsöffnung 3 befestigt ist. Die Profilschienen 8 sind in der befestigten Stellung parallel zueinander ausgerichtet und derart geformt, dass die Verschutzungswandteile 10 mit den Führungsteilen 9 darin eingreifen und längsverschieblich geführt sind. Zum Einführen bzw. Montieren der ersten und zweiten Verschutzungswandteile 5 und 6 können die Profilschienen 8 seitlich offen sein, so dass die Verschutzungswandteile 5 und 6 mit den Führungsteilen 9 nacheinander in die Profilschienen 8 eingeführt werden können. Die Profilschienen 8 können z.B. durch einseitig offene C-Profile gebildet sein, welche derart an der Rauchartikelherstelleinrichtung befestigt sind, dass ihre offenen Seiten bevorzugt zu der Vorderseite gerichtet sind, so dass sie eine längsverschiebliche Führung der darin eingreifenden Führungsteile 9 ermöglichen. Alternativ wäre auch eine Befestigung der Profilschienen 8 mit einander zugewandten offenen Seiten oder mit zur Rückseite gerichteten offenen Seiten denkbar, sofern die Führungsteile 9 aufgrund ihrer Formgebung und Anordnung eine derartige Ausrichtung fordern. Idealerweise sind die Profilschienen 8 so bemessen, dass sie jeweils aus einem einzigen Stück gefertigt sind, so dass die Führungsteile 9 nicht über Trennstellen hinweg bewegt werden müssen, was zu unerwünschten Geräuschen oder Störungen der Führungsbewegung führen kann. Sofern die Randseiten 7 so lang sind, dass eine Verwendung einer einzigen Profilschiene 8 nicht möglich ist, sollten so wenig wie möglich Einzelteile vorgesehen werden und die Trennstellen der Einzelteile der Profilschiene 8 an den verschiedenen Randseiten 7 sollten so angeordnet sein, dass sie von den Führungsteilen 9 beim Verschieben der ersten Verschutzungswandteile 5 nicht gleichzeitig überfahren werden.

Die Verschutzung 4 kann dann je nach dem Ort der vorzunehmenden Handlung durch das Aufziehen des zugeordneten ersten Verschutzungswandteils 5 abschnittsweise geöffnet werden, und die Wartungshandlung oder Reparaturhandlung kann lokal an dem freigelegten Abschnitt der Rauchartikelherstelleinrichtung vorgenommen werden. Dabei ist die Bedienperson weiterhin gegenüber Einwirkungen aus den nicht freigelegten Abschnitten geschützt oder anders ausgedrückt, die verbleibenden Abschnitte der Rauchartikelherstelleinrichtung sind damit weiterhin durch die verbleibenden nicht geöffneten ersten und zweiten Verschutzungswandteile 5 und 6 vor äußeren Einwirkungen geschützt. Da die zweiten Verschutzungswandteile 6 jeweils an dem äußeren Rand der Zugangsöffnung 3 schwenkbar gelagert sind, können diese in Form einer links oder rechts angeschlagenen Tür geöffnet werden und geben dadurch den von ihnen abgedeckten Abschnitt der Zugangsöffnung 3 vollständig frei. Da das linke zweite Verschutzungswandteil 6 aufgrund der randseitigen Schwenklagerung nach linkes geöffnet wird, können die ersten Verschutzungswandteile 5 dann nach dem Falten nach links auf das zweite Verschutzungswandteil 6 zu einem dichten Paket geschoben werden, ohne dass zwischen dem linksseitigen Rand der Zugangsöffnung 3 und dem Paket der Verschutzungswandteile 5 und 6 bzw. des zweiten Verschutzungswandteiles 6 eine Lücke vorhanden ist.

Ferner ist an den Randseiten 7 der Zugangsöffnung 3 eine dynamische, querschnittsveränderbare erste Dichtung 13 vorgesehen, an welcher die ersten und zweiten Verschutzungswandteile 5 und 6 in einer die Zugangsöffnung 3 verschließenden Geschlossenstellung anliegen, so dass der Innenraum der Rauchartikelherstelleinrichtung gegenüber der Umgebung gekapselt ist. Dadurch ist ein Schallschutz verwirklicht, durch welchen die Lärmbelastung der sich in dem Umfeld der Rauchartikelherstelleinrichtung aufhaltenden Personen gesenkt wird. Die dynamische, querschnittsveränderbare erste Dichtung 13 kann z.B. eine pneumatische Dichtung sein, welche an eine externe Drucklufteinrichtung angeschlossen ist. Die erste Dichtung 13 kann dadurch nach dem Schließen der Verschutzung 4 durch eine Aktivierung der Drucklufteinrichtung zu einem größeren Querschnitt aufgeblasen werden, so dass sie mit einer vergrößerten Dichtkraft zwischen den ersten und zweiten Verschutzungswandteilen 5 und 6 und dem Rand der Zugangsöffnung 3 anliegt. Da die Module 1 zum Transport der Produkte in der Rauchartikelherstelleinrichtung jeweils mit Unterdruck beaufschlagte Mulden zum Halten der Produkte aufweist, welche ebenfalls an eine Drucklufteinrichtung angeschlossen sind, liegt bei einem Betrieb der Rauchartikelherstelleinrichtung innerhalb des Gehäuses 2 immer ein leichter Unterdruck an. Durch diesen Unterdruck werden die ersten und zweiten Verschutzungswandteile 5 und 6 zusätzlich leicht gegen den Rand der Zugangsöffnung 3 gedrängt. Damit kann verhindert werden, dass die ersten und zweiten Verschutzungswandteile 5 und 6 durch die dynamische erste Dichtung 13 weggedrängt werden.

Zum Öffnen eines Verschutzungswandteiles 5 oder 6 wird der Querschnitt der dynamischen ersten Dichtung 13 verringert, und dadurch die zwischen dem Verschutzungswandteil 5 oder 6 und dem Rand der Zugangsöffnung 3 wirkenden Druckkraft verringert und durch Bildung eines Spaltes auf Null gesetzt. Damit wird die Einspannung der Verschutzungswandteiles 5 und 6 gelöst und das erste oder zweite Verschutzungswandteil 5 oder 6 kann mit einer reduzierten Betätigungskraft geöffnet werden. Da die Öffnung eines Verschutzungswandteiles 5 oder 6 durch einen Schutzschalter nur bei einem Stop der Rauchartikelherstelleinrichtung möglich ist bzw. automatisch zu einem Stop der Rauchartikelherstelleinrichtung führt, führt das sektionsweise Öffnen der Verschutzung 4 nicht zu einer Erhöhung der Lärmbelästigung. Ferner werden die ersten und zweiten Verschutzungswandteile 5 und 6 in der Geschlossenstellung während des Betriebes der Rauchartikelherstelleinrichtung z.B. über einen Sicherheitsschalter mit einer Magnetkraft in der Geschlossenstellung gehalten, welche derart bemessen ist, dass das Bedienpersonal zum Öffnen eines Verschutzungswandteiles 5 oder 6 eine Zugkraft von mehr als 1 kN Öffnungskraft aufbringen muss, wodurch eine ungewollte Öffnung ausgeschlossen werden kann. Für den Fall, dass ein erstes oder zweites Verschutzungswandteil 5 oder 6 während des Betriebes im Notfall unter Überwindung dieser Öffnungskraft geöffnet wird, wird die Rauchartikelherstelleinrichtung über einen Not-Aus-Schalter sofort angehalten.

Die Teilwandteile 10 sind jeweils so bemessen, dass die Abstände zwischen den jeweilig daran angeordneten Führungsteilen 9 und dem Schwenklager 17 an der ersten Randseite 11 identisch sind, so dass die Teilwandteile 10 beim Öffnen zu einem gleichschenkligen Dreieck aufgezogen werden. Nach oder während des Aufziehens können die ersten Verschutzungswandteile 5 gleichzeitig seitlich verschoben werden, sofern dies zur Freigabe des für die Handlung zugänglich zu machenden Abschnittes der Rauchartikelherstelleinrichtung erforderlich ist.

Jedes Teilwandteil 10 der ersten Verschutzungswandteile 5 und auch das zweite Verschutzungswandteil 6 ist aus einer doppellagigen Glasscheibe mit einer dazwischen angeordneten Folie als Sicherheitsglas ausgebildet, so dass ein Zerspringen des Glases in viele Einzelteile bei einem Bruch des Glases verhindert werden kann. Ferner kann das Sicherheitsglas mit der dazwischen angeordneten Folie einen weiteren Beitrag zum Schallschutz leisten. Außerdem weist der Verbund des Sicherheitsglases mit den beiden Glasscheiben und der dazwischen angeordneten Folie eine sehr hohe Festigkeit auf, so dass es größeren Krafteinwirkungen standhält. Da die ersten und zweiten Verschutzungswandteile 5 und 6 damit nahezu vollständig aus transparentem Glas ausgebildet sind, kann der Bediener die Rauchartikelherstelleinrichtung auch während des Betriebes durch die Verschutzung 4 vollständig beaufsichtigen und die möglicherweise vorhandene Fehlerstelle identifizieren.

Neben den beschriebenen Vorteilen der neuartigen Verschutzung 4 kann diese aufgrund der erfindungsgemäßen Lösung unter Designgesichtspunkten so ausgelegt werden, dass die Rauchartikelherstelleinrichtung maximal einsehbar ist und damit ein sehr modernes transparentes Erscheinungsbild aufweist. Aufgrund des verbesserten Schallschutzes durch die neuartige Verschutzung kann die Rauchartikelherstelleinrichtung auch in Bereichen betrieben werden, in denen ansonsten kein weiterer Schallschutz vorgesehen ist bzw. in denen das Bedienpersonal nicht zusätzlich vor Lärmbelästigung geschützt ist.

## Patentansprüche

1. Rauchartikelherstelleinrichtung mit verschiedenen Modulen (1) und einer Zugangsöffnung (3), wobei
- eine die Zugangsöffnung (3) verschließende, zu öffnende Verschutzung (4) vorgesehen ist,
**dadurch gekennzeichnet, dass**
- die Verschutzung (4) durch eine Kombination aus wenigstens zwei identischen, unabhängig voneinander zu öffnenden ersten Verschutzungswandteilen (5) und wenigstens einem zweiten individuell bemessenen Verschutzungswandteil (6) gebildet ist.

2. Rauchartikelherstelleinrichtung nach Anspruch 1, **dadurch gekennzeichnet, dass**
- die Zugangsöffnung (3) an wenigstens zwei gegenüber liegenden Randseiten (7) jeweils eine Profilschiene (8) aufweist, an denen die ersten und/oder zweiten Verschutzungswandteile (5,6) in einer Schließstellung zur Anlage gelangen.

3. Rauchartikelherstelleinrichtung nach Anspruch 2, **dadurch gekennzeichnet, dass**
- die ersten Verschutzungswandteile (5) durch wenigstens zwei Teilwandteile (10) gebildet sind, welche jeweils mittels eines Führungsteils (9) in den Profilschienen (8) schwenkbar und verschieblich geführt sind, wobei
- die jeweils aneinander angrenzenden Teilwandteile (10) an den senkrecht zu den Profilschienen (8) ausgerichteten ersten Randseiten (11) schwenkbar miteinander verbunden sind.

4. Rauchartikelherstelleinrichtung nach Anspruch 3, **dadurch gekennzeichnet, dass**
- die Führungsteile (9) in identischen Abständen zu den ersten Randseiten (11) angeordnet sind.

5. Rauchartikelherstelleinrichtung nach Anspruch 3 oder 4,
**dadurch gekennzeichnet, dass**
- die Führungsteile (9) an senkrecht zu den ersten Randseiten (11) verlaufenden dritten Randseiten (12), in einem größtmöglichen Abstand zu den ersten Randseiten (11) angeordnet sind.

6. Rauchartikelherstelleinrichtung nach einem der Ansprüche 2 bis 5, **dadurch gekennzeichnet, dass**
- zwischen den Profilschienen (8) und den ersten und/oder zweiten Verschutzungswandteilen (5,6) eine erste Dichtung (13) vorgesehen ist, welche querschnittsveränderbar ausgebildet ist.

7. Rauchartikelherstelleinrichtung nach Anspruch 6, **dadurch gekennzeichnet, dass**
- eine Einrichtung vorgesehen ist, mittels derer der Querschnitt der ersten Dichtung (13) aktiv veränderbar ist, und
- die Einrichtung derart ansteuerbar ist, dass der Querschnitt der ersten Dichtung (13) in einer Schließstellung des ersten und/oder zweiten Verschutzungswandteiles (5,6) vergrößerbar und/oder zum Bewegen des ersten und/oder zweiten Verschutzungswandteiles (5,6) in eine Offenstellung verkleinerbar ist.

8. Rauchartikelherstelleinrichtung nach einem der vorangegangenen Ansprüche, **dadurch gekennzeichnet, dass**
- die ersten und/oder zweiten Verschutzungswandteile (5,6) an wenigstens einer einem benachbarten Verschutzungswandteil (5,6) zugewandten Randseite eine statische zweite Dichtung (14) aufweisen.

9. Rauchartikelherstelleinrichtung nach einem der vorangegangenen Ansprüche, **dadurch gekennzeichnet, dass**
- zwischen den ersten und/oder den zweiten Verschutzungswandteilen (5,6) wenigstens ein verschiebbares Zwischenstück vorgesehen ist.

## Claims

1. Smoking article manufacturing device having various modules (1) and an access opening (3),
- a protective means (4) being provided which can be opened and which closes the access opening (3),
**characterised in that**
- the protective means (4) is formed by a combination of at least two identical first protective-means wall parts (5) that can be opened independently of one another and at least one second individually dimensioned protective-means wall part (6).

2. Smoking article manufacturing device according to claim 1, **characterised in that**
- the access opening (3) comprises on each of at least two edge faces (7) lying opposite one another a profiled rail (8), against which the first and/or second protective-means wall parts (5, 6) rest when in a closed position.

3. Smoking article manufacturing device according to claim 2, **characterised in that**
- the first protective-means wall parts (5) are formed by at least two partial wall parts (10), which are each pivotably and displaceably guided in the profiled rails (8) by means of a guide part (9),
- the respectively adjoining partial wall parts (10) being pivotally interconnected on the first edge faces (11) oriented perpendicularly to the profiled rails (8).

4. Smoking article manufacturing device according to claim 3, **characterised in that**
- the guide parts (9) are arranged at identical distances from the first edge faces (11).

5. Smoking article manufacturing device according to either claim 3 or claim 4, **characterised in that**
- the guide parts (9) are arranged on third edge faces (12) extending perpendicularly to the first edge faces (11), at the greatest possible distance from the first edge faces (11).

6. Smoking article manufacturing device according to any of claims 2 to 5, **characterised in that**
- a first seal (13) is provided between the profiled rails (8) and the first and/or second protective-means wall parts (5, 6), which seal is designed so as to have a variable cross section.

7. Smoking article manufacturing device according to claim 6, **characterised in that**
- a device is provided by means of which the cross section of the first seal (13) can be actively varied, and
- the device can be controlled such that the cross section of the first seal (13) can be enlarged in a closed position of the first and/or second protective-means wall part (5, 6) and/or can be reduced in order to move the first and/or second protective-means wall part (5, 6) into an open position.

8. Smoking article manufacturing device according to any of the preceding claims, **characterised in that**
- the first and/or second protective-means wall parts (5, 6) have a static second seal (14) on at least one edge face facing an adjacent protective-means wall part (5, 6).

9. Smoking article manufacturing device according to any of the preceding claims, **characterised in that**
- at least one displaceable intermediate piece is provided between the first and/or the second protective-means wall parts (5, 6).

## Revendications

1. Dispositif de fabrication d'articles à fumer, comportant différents modules (1) et une ouverture d'accès (3), dans lequel
- une protection (4) est prévue, qui ferme l'ouverture d'accès (3) et peut être ouverte, **caractérisé en ce que**
- la protection (4) est formé par la combinaison d'au moins deux premières parties de paroi de protection (5) identiques pouvant être ouvertes indépendamment l'une de l'autre et d'au moins une deuxième partie de paroi de protection (6) dimensionnée individuellement.

2. Dispositif de fabrication d'articles à fumer selon la revendication 1, **caractérisé en ce que**
- l'ouverture d'accès (3) présente un rail profilé (8) sur chacun d'au moins deux côtés de bord opposés (7), contre lequel les premières et/ou deuxièmes parties de paroi de protection (5, 6) viennent s'appuyer dans une position fermée.

3. Dispositif de fabrication d'articles à fumer selon la revendication 2, **caractérisé en ce que**
- les premières parties de paroi de protection (5) sont formées par au moins deux parties de paroi partielles (10), qui sont chacune guidées de manière pivotante et coulissante dans les rails profilés (8) au moyen d'une partie de guidage (9), dans lequel
- les parties de paroi partielles (10) adjacentes sont reliées entre elles de manière pivotante au niveau de premiers côtés de bord (11) orientés perpendiculairement aux rails profilés (8).

4. Dispositif de fabrication d'articles à fumer selon la revendication 3, **caractérisé en ce que**
- les parties de guidage (9) sont disposées à égales distances des premiers côtés de bord (11).

5. Dispositif de fabrication d'articles à fumer selon la revendication 3 ou 4, **caractérisé en ce que**
- les parties de guidage (9) sont disposées sur des troisièmes côtés de bord (12) s'étendant perpendiculairement aux premiers côtés de bord (11), à la plus grande distance possible des premiers côtés de bord (11).

6. Dispositif de fabrication d'articles à fumer selon l'une des revendications 2 à 5, **caractérisé en ce que**
- un premier joint (13), dont la section transversale est conçue modifiable, est prévu entre les rails profilés (8) et les premières et/ou deuxièmes parties de paroi de protection (5, 6).

7. Dispositif de fabrication d'articles à fumer selon la revendication 6, **caractérisé en ce que**
- un dispositif est prévu, au moyen duquel la section transversale du premier joint (13) peut être modifiée activement, et
- le dispositif peut être commandé de telle sorte que la section transversale du premier joint (13) peut être agrandie dans une position fermée de la première et/ou deuxième partie de paroi de protection (5, 6) et/ou peut être réduite pour déplacer la première et/ou deuxième partie de paroi de protection (5, 6) dans une position ouverte.

8. Dispositif de fabrication d'articles à fumer selon l'une des revendications précédentes, **caractérisé en ce que**
- la première et/ou deuxième partie de paroi de protection (5, 6) présentent un deuxième joint (14) statique sur au moins un côté de bord tourné vers une partie de paroi de protection (5, 6) adjacente.

9. Dispositif de fabrication d'articles à fumer selon l'une des revendications précédentes, **caractérisé en ce que**
- au moins une pièce intermédiaire déplaçable est prévue entre les premières et/ou deuxièmes parties de paroi de protection (5, 6).
